# EUROPÄISCHE PATENTSCHRIFT

(11) **EP 0 983 936 B1**
(45) Veröffentlichungstag und Bekanntmachung des Hinweises auf die Patenterteilung: **05.11.2003**
(21) Anmeldenummer: 99117247.9
(22) Anmeldetag: 02.09.1999
(51) Int. Cl.: B64C 1/14

(54) **Verschlusskappe für den Ausschnitt eines Schalensegments eines Hubschraubers**
Closure device for openings on helicopter panels
Dispositif de fermeture pour ouvertures dans les panneaux d'hélicoptères

(30) Priorität: 05.09.1998 DE 19840595
(43) Veröffentlichungstag der Anmeldung: 08.03.2000
(73) Patentinhaber: Eurocopter Deutschland GmbH, 86609 Donauwörth (DE)
(72) Erfinder: Greisinger, Michael, 81671 München (DE); Haffstein, Claus-Jürgen, 81735 München (DE)
(74) Vertreter: Baum, Wolfgang, Dipl.-Ing.

(56) Entgegenhaltungen:
- DE-B- 1 130 295

## Beschreibung

### TECHNISCHES GEBIET

Die Erfindung betrifft ein Hubschrauber-Schalensegment, mit einem Ausschnitt, einem an dem Ausschnitt angeordneten Rahmen und einer den Ausschnitt verschließenden Verschlussklappe, die mittels eines Gelenks um eine Schwenkachse schwenkbar am Rahmen angeordnet ist und die bei einer Schließlage der Verschlussklappe am Umfang des Ausschnitts am Rahmen anliegt und die mittels an der Verschlussklappe angeordneter Verschlüsse am Umfang des Ausschnitts verriegelbar ist.

### STAND DER TECHNIK

Beim Hubschrauber wird der Rumpf aus mehreren Rumpfsektionen zusammengesetzt, wobei jede einzelne Rumpfsektion aus mehreren Schalensegmenten gebildet wird. Die Schalensegmente sind untereinander fest verbunden. Der Rumpf eines Hubschraubers und damit jede einzelne Rumpfsektion ist unterschiedlich starken Beanspruchungen ausgesetzt. Wesentlich sind hierbei die Beanspruchungen durch Kräfte (Lasten), die durch harte Landung oder Crash entstehen. Die dabei auftretenden Quer- und Schubkräfte müssen über die Schalensegmente einer Rumpfsektion sicher übertragen und abgeleitet werden, um Rißbildung zu vermeiden.

Mit dem Einbau einer Verschlußklappe in ein Schalensegment einer Rumpfsektion entsteht ein Ausschnitt, der die zur Kraftübertragung erforderliche Fläche des Schalensegments drastisch verkleinert. Die Verschlußklappe ist erforderlich, um Zugang für Inspektion oder Wartung wichtiger Baugruppen zu erhalten. Die auftretenden Quer- und Schubkräfte im Schalensegment müssen bei vorhandenem Ausschnitt folglich über eine verkleinerte Fläche sicher übertragen und abgeleitet werden. Es kommt infolge des Ausschnitts zu einer unerwünschten Konzentrationen der auftretenden Last im Schalensegment. Um der Gefahr einer Rißbildung vorzubeugen erfordert dies zusätzliche Verstärkungen des Schalensegments. Eine solche Maßnahme entsprach der bekannten Verfahrensweise. Diese zusätzlichen Verstärkungen am gefährdeten Abschnitt des Schalensegments können die Zugänglichkeit bzw. die Größe des Inspektions- bzw. Wartungsraumes mindern.

Da die Rumpfsektion nicht vollständig starr ist, kommt es bei unterschiedlichen Beladungszuständen des Hubschraubers zu zeitweisen Verformungen der Schalensegmente. Dies führt auch zu einer Verformung am Ausschnitt für die Verschlußklappe. Die Folge ist ein Klemmen der Verschlußklappe und damit eine Beeinträchtigung der Klappenfunktion. Es besteht aber auch die Gefahr einer bleibenden Verformung der Verschlußklappe und somit einer dauerhaften Funktionsstörung der Verschlußklappe.

### DARSTELLUNG DER ERFINDUNG

Aufgabe der Erfindung ist es, ein mit einer Verschlußklappe versehenes Hubschrauber-Schalensegment einer Rumpfsektion eines Hubschraubers so zu gestalten, daß Verformungen der Rumpfsektion nicht zu einem Blockieren der Klappenfunktion führen und andererseits zusätzliche Materialverstärkungen für das Schalensegment und/oder die Verschlußklappe vermieden werden können.

Diese Aufgabe wird durch ein erfindungsgemäßes Hubachrauber-Schalensegment mit den Merkmalen des Anspruch 1 gelöst.

Zwischen dem Umfang der Verschlußklappe und dem Umfang des Ausschnitts, der durch die Verschlußklappe abdeckbar ist, sind Kraftübertragungsmittel im Eingriff, die eine Kraftübertragung vom Schalensegment zur Verschlußklappe und umgekehrt ermöglichen. Als Kraftübertragungsmittel sind Formverbindungselemente wie beispielsweise Bolzen, vorzugsweise Stehbolzen geeignet, die in Eingriff sind mit Langlöchern. Vorzugsweise trägt das Schalensegment die Stehbolzen und die Verschlußklappe trägt die entsprechenden Langlöcher. Eine umgekehrte Anordnung wäre auch möglich.

Ein höhenverstellbares Gelenk ist mit einer Kante der Verschlußklappe und dem Rahmen verbunden, wobei in Schließlage der rahmenseitige Schenkel des Gelenks ohne Eingriff ist mit einer rahmenseitig angeordneten Führungseinrichtung. Außerdem nimmt die Verschlußklappe vorzugsweise im Bereich der gelenkseitigen Kante eine Kippachse auf. Da die Kippachse senkrecht zur Ebene der Verschlußklappe gerichtet ist, ist die Verschlußklappe in Ebene ihrer Schließlage kippbar.

In einer weiteren Ausgestaltung ist vorgesehen, daß die Langlöcher mit ihrer größten Weite in Y-Richtung ausgerichtet sind. In X-Richtung liegen dagegen die Stehbolzen formschlüssig im Langloch an. Langloch bzw. Stehbolzen sind somit relativ in Y-Richtung bewegbar.

Das höhenverstellbare Gelenk ist vorzugsweise als ein Dreh-Hub-Scharnier ausgebildet. Mit Entriegeln der Verschlüsse beginnt der öffnungsvorgang für die Verschlußklappe. Mit Hilfe eines Hubmittels, beispielsweise einer Druckfeder, wird das Scharnier und damit die Verschlußklappe aus einer Schließlage in eine Öffnungslage gehoben. In der Öffnungslage ist das Scharnier in vollem Umfang schwenkbar. Um die Hubbewegung zielgerichtet zu führen ist eine Führungseinrichtung am Scharnier angeordnet. Das ist vorteilhafterweise eine Hülse. Die Hülse hat zwei Innendurchmesser, wobei der Übergang vom größeren zum kleineren Innendurchmesser konisch verjüngt ist. Mit dieser Maßnahme wird erreicht, daß der Schenkel des Schamiers bei Schließlage nicht in Eingriff kommt mit der Führungseinrichtung, sondern erst in Eingriff kommt in der Öffnungslage.

Mit der erfindungsgemäßen Lösung wird es möglich, daß die Verschlußklappe Lasten ab einem definierten Verformungsniveau des Schalensegments aufnehmen und übertragen kann. Vorzugsweise sind die Langlöcher so bemessen, daß bei normalen Verformungen einer Rumpfsektion bzw. des Schalensegments (infolge von Tanken oder Beladen) die Formverbindungselemente (Bolzen) noch nicht zum Anliegen am anderen Ende der Langlöcher kommen. Gleichzeitig erfüllt diese Verschlußklappe die Funktion einer Tür, die um eine Schwenkachse schwenkbar ist und ohne Werkzeug zu öffnen oder zu schließen ist. Die Verschlußklappe ist in der Lage Verformungen der umgebenden Struktur auszugleichen.

Die Übertragung hoher Lasten beeinträchtigt nicht den Ausgleich von Verformungen des Schalensegments gegenüber der Verschlußklappe.

Die Erfindung sowie weitere Einzelheiten werden anhand des nachfolgenden Ausführungsbeispiels und der dazugehörigen Zeichnungen erläutert.

### KURZE BESCHREIBUNG DER ZEICHNUNGEN

Es zeigt
- **Figur 1**: eine Seitenansicht einer Rumpfsektion eines Hubschraubers in Schalenbauweise mit einem erfindungsgemäßen HubschrauberSchatensegment,
- **Figur 2**: ausschnittsweise eine Vorderansicht einer Verschlußklappe an dem Hubschrauber-Schalensegment im unbelasteten Zustand,
- **Figur 2a**: ausschnittsweise eine Vorderansicht der Verschlußklappe am Hubschrauber-Schalensegment im belasteten Zustand,
- **Figur 2b**: Schnitt A1-A1 aus Figur 1, mit rahmenseitigen Stehbolzen, die bei Schließlage der Verschlußklappe im Eingriff mit Langlöchern der Verschlußklappe stehen, und eine Position der Verschlußklappe bei Öffnungslage,
- **Figur 3**: die mit einer Kippachse versehene Verschlußklappe im unbelasteten und belasteten Zustand,
- **Figur 4**: Schnitt B1-B1 aus Figur 1 mit einem Detail eines lastübertragenden Verschlusses,
- **Figur 5**: Schnitt C1-C1 aus Figur 1 mit einem Scharnier in Schließlage der Verschlussklappe, und
- **Figur 5a**: den Scharnier in Öffnungslage der Verschlussklappe.

### DARSTELLUNG VON BEVORZUGTEN AUSFÜHRUNGSBEISPIELEN

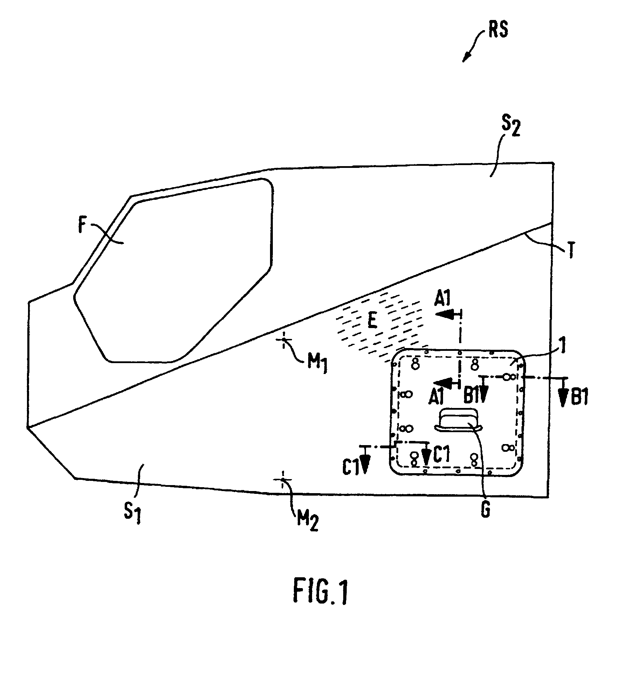

**Figur 1** zeigt in einer Seitenansicht eine Rumpfsektion RS eines Hubschraubers in Schalenbauweise. Die Rumpfsektion RS verkörpert beispielsweise eine Pilotenkanzel. Nach der gezeigten Figur besteht die Rumpfsektion RS beispielsweise aus zwei Hubschrauber-Schalensegmenten S₁, S₂, nachfolgend kurz Schalensegment S₁ und Schalensegment S₂ genannt. Das obere Schalensegment S₂ beinhaltet ein Sichtfenster F. Das untere, erfindungsgemäße Schalensegment S₁ beinhaltet eine relativ große Verschlußklappe1 mit einem Griffelement G. In einem Nahtbereich T sind beide Schalensegmente S₁, S₂ zusammengefügt. Bekannterweise bestehen die Schalensegmente S₁, S₂ aus einem Verbundwerkstoff. Die Verschlußklappe 1 verdeckt einen Rumpfinnenraum, in dem Wartungselemente oder elektronische Geräte installiert sind. Für das Inspektions- bzw. Wartungspersonal muß dieser Rumpfinnenraum stets zugänglich und frei von Hindernissen sein. Die Verschlußklappe muß leichtgängig und ohne Werkzeug zu bedienen sein.

Am Schalensegment S₁ sind weiterhin Anschlußpunkte M₁, M₂ für ein noch zu montierendes Landewerk zu erkennen. Über diese Anschlußpunkte M₁, M₂ werden insbesondere bei einer harten Landung oder einem Crash relativ hohe Stöße des Landewerks auf die Rumpfsektion RS übertragen. Diese Laststöße werden zuerst vom Schalensegment S₁ aufgenommen.

Aufgrund des durch die Verschlußklappe 1 zu verschließenden Ausschnitts ist die Übertragungsfläche für Laststöße im Schalensegment S₁ reduziert. Insbesondere in einem Bereich E (gestrichelt) des Schalensegments S₁ besteht Bruchgefahr infolge hoher Schubkräfte.

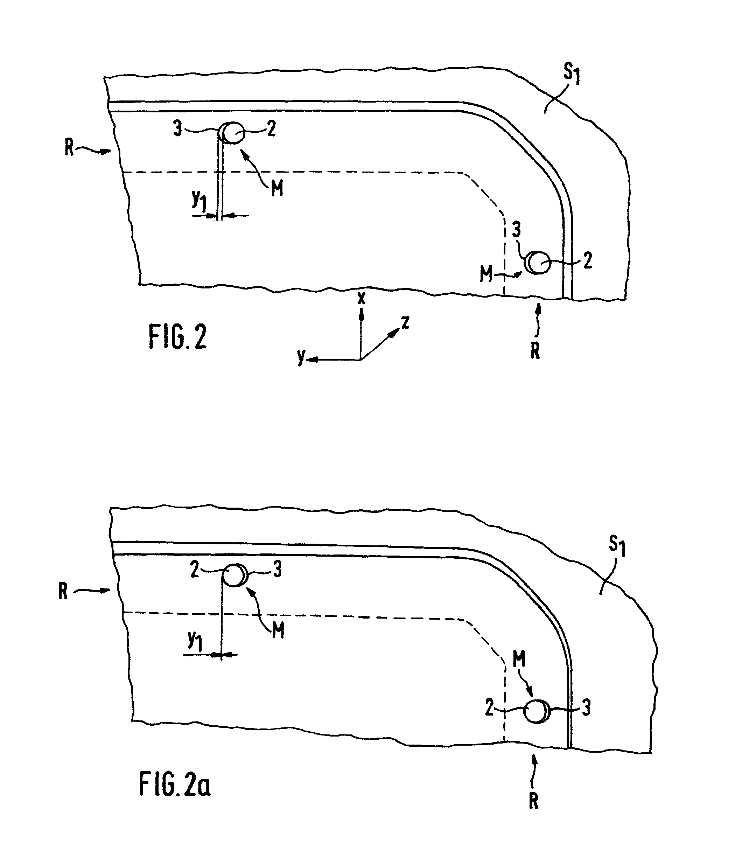

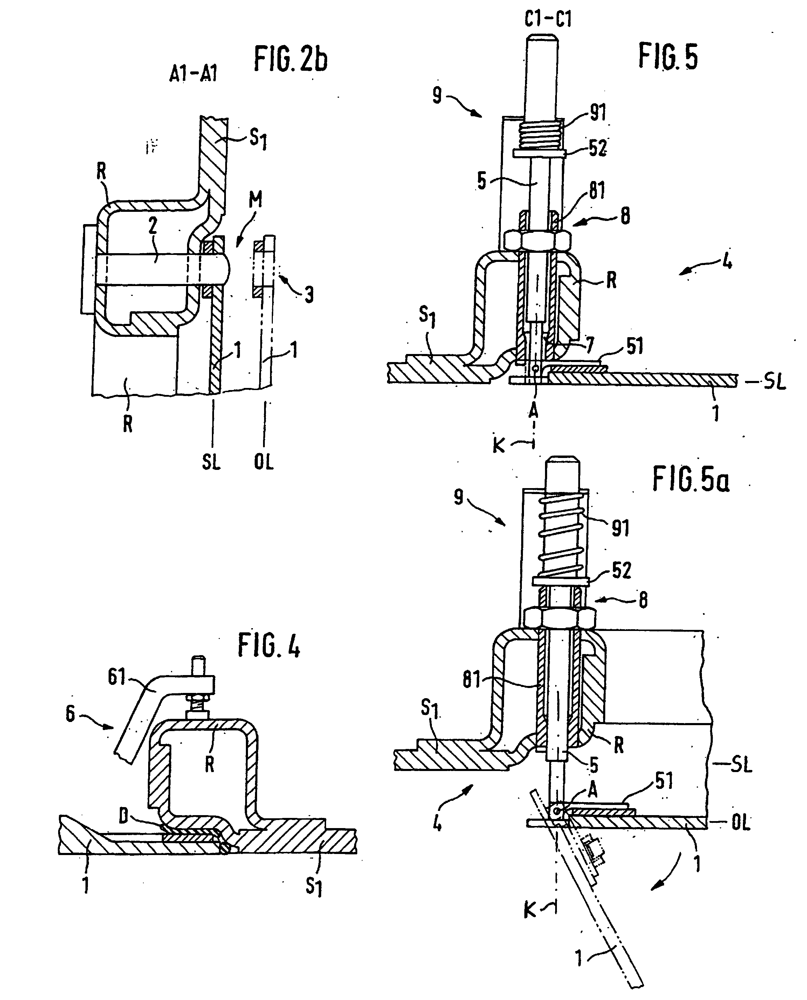

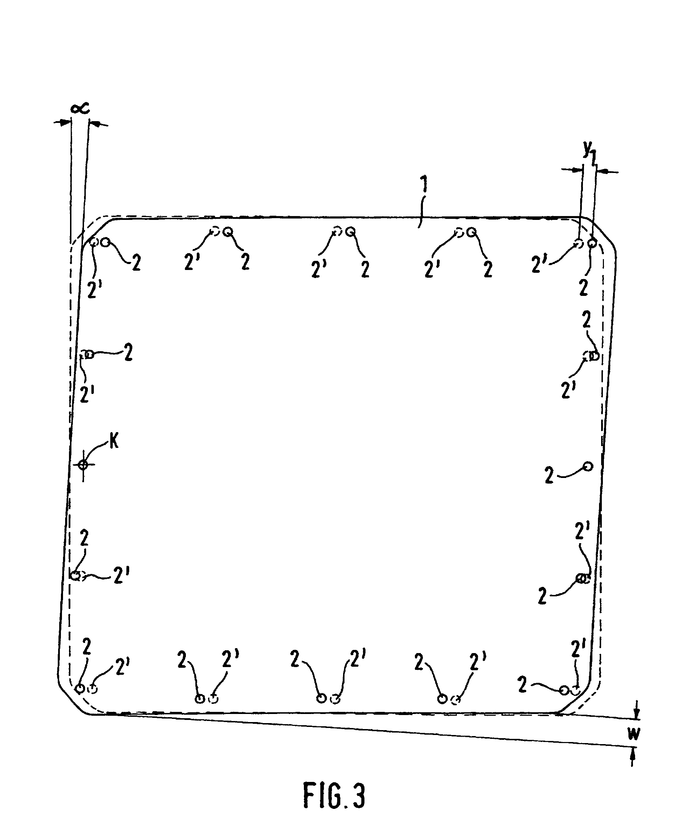

**Figur 2** zeigt ausschnittsweise eine Vorderansicht der Verschlußklappe 1 am Schalensegment S₁ im unbelasteten Zustand. Dort ist gezeigt, daß am Rahmen R (Rahmenbegrenzung als Strichlinie) des Schalensegments S₁ Formverbindungselemente 2 angeordnet sind. Ein Formverbindungselement 2 kann beispielsweise ein Bolzen, insbesondere ein Stehbolzen sein. Formverbindungselement bzw. Stehbolzen sind mit Bezugszeichen 2 gekennzeichnet.

Die Verschlußklappe 1 hat Langlöcher 3, die bei Schließlage der Verschlußklappe 1 in Eingriff sind mit den Stehbolzen 2. Ein Langloch 3 ist so gestaltet, daß es in Y-Richtung einen Spalt Y₁ bildet. Ein Stehbolzen 2 ist in X-Richtung im Langloch 3 kraftübertragend anliegend. Somit wird eine zwangsweise Bewegungsrichtung (Y-Richtung) des Stehbolzens 2 definiert. Das Formverbindungselement bzw. der Stehbolzen 2 bilden in Eingriff mit dem Langloch 3 ein vorteilhaftes Kraftübertragungsmittel M. Es sind aber auch andere Kraftübertragungsmittel ausführbar.

Eine Erhöhung der Beladung oder Stoßbelastungen beim Landevorgang führen zu vorzugsweise vertikalen Schubkräften, die eine zeitweise Verformung des Schalensegments S₁ erzeugen.

Mit den Stehbolzen 2 existieren Kraftübertragungspunkte im Schalensegment S₁. Es erfolgt damit eine definierte Kraftübertragung über die Verschlußklappe 1. Ein Anteil der Belastung wird somit über die in X-Richtung formschlüssig anliegenden Stehbolzen auf die Verschlußklappe 1 und weiter auf das Schalensegment übertragen. Da jedoch die Verschlußklappe 1 entsprechend Figur 3 eine Kippachse K hat, wird die Verschlußklappe 1 in Schließlage ab einem definierten Verformungsniveaus um diese Kippachse K gekippt. Die Kippachse K ist senkrecht zur Ebene der Verschlußklappe 1 geführt. Im Zuge des Kippvorgangs "wandert" der Stehbolzen 2 relativ zum Langloch 3 in Y-Richtung in Position Stehbolzen 2', d. h. er durchwandert bei hoher Belastung den Spalt Y₁ und kommt am Spaltende in Anschlag mit dem Langloch 3 (siehe Fig. 2a). Nun kann er bei einer harten Landung oder einem Crash entstehende Lasten übertragen und somit das Schalensegment S₁ entlasten.

Um diese Kippbewegung in der Schließlage zu ermöglichen, ist ein Gelenk 4 mit einem rahmenseitigen Schenkel 5 vorgesehen, welches diese Kippbewegung der Verschlußklappe 1 zulässt. Dies ist möglich, wenn der rahmenseitige Schenkel 5 bei Schließlage der Verschlußklappe 1 mit dem Rahmen R nicht formschlüssig in Eingriff ist. Ein solches Gelenk 4 wird an späterer Stelle erläutert.

Der Ausgleich der Verformung zwischen Schalensegment S₁ und Verschlußklappe 1 erfolgt nicht über die Langlöcher in Richtung der vorzugsweise vertikalen Verformungskräfte, sondern wird über das Kippen der Verschlußklappe 1 ermöglicht.

Mit der Erfindung wird erreicht, daß die Verschlußklappe 1 mittels der Kraftübertragungsmittel bei einer harten Landung oder einem Crash in die Kraftübertragung einbezogen wird, so daß eine Bruchgefahr im Bereich E des Schalensegments S₁ reduziert wird. Das Kippen der Verschlußklappe 1 in der Schließlage verhindert ein Verklemmen oder eine dauerhafte Funktionsstörung durch Verformung der Verschlußklappe 1.

Infolge der Ausgleichsbewegung der Verschlußklappe 1 wird vorteilhafterweise die Y-Komponente der ursprünglich in X-Richtung (vertikal) erfolgenden Belastung ausgeglichen. Damit kann ein Übermaß der Langlöcher deutlich reduziert werden.

Dazu zeigt **Figur 3** mit einer durchgehenden Linie schematisiert den unter Belastung verformten Ausschnitt des Schalensegments, der eine Lageveränderung der Verschlußklappe 1 auslöst. Eine solche Belastung liegt vor, wenn das normale Belastungsniveau durch Volltanken und maximale Beladung überschritten ist.

Dabei hat der zeitweise verformte Rahmen zu einer Auslenkung W der Unterkante der Verschlußklappe 1 geführt.

Mit einer gestrichelten Linie ist die um die Kippachse K gekippte Verschlußklappe 1 dargestellt. Die Verschlußklappe 1 ist um einen Winkel α gekippt.

Die einzelnen Stehbolzen 2 haben den Spalt Y₁ im Langloch 3 durchwandert und liegen am anderen Ende des Langlochs 3 formschlüssig an.

**Figur 4** zeigt den Schnitt B1-B1 aus Figur 1 mit einem Detail eines Verschlusses. Dieser Verschluß 6 ist an der Verschlußklappe 1 befestigt (nicht dargestellt). In der Schließlage der Verschlußklappe 1 stützt sich der Verschluß 6 mit einem Spannarm 61 am Rahmen R des Schalensegments S₁ ab. Die Verschlußklappe 1 liegt am Rahmen R an, wobei eine Dichtung D dazwischen liegt. Mit diesen Verschlüssen wird erreicht, daß sich die Verschlußklappel unter Last nicht durch die Verformungen oder durch Kräfte in Z-Richtung öffnet. Es werden sogenannte lastübertragende Verschlüsse 6 eingesetzt.

**Figur 5** zeigt das Gelenk 4, das in Schließlage der Verschlußklappe 1 ein Kippen der Verschlußklappe 1 um die Kippachse K zuläßt.

Der rahmenseitige Schenkel 5 ist bezüglich seines Durchmessers zweistufig abgesetzt, d. h. der Schenkel 5 ist in einer zweiten Stufe bezüglich seines Durchmessers verkleinert. Der Schenkelabschnitt mit verkleinertem Durchmesser bildet das Kopfende des Schenkels 5. Das Kopfende des Schenkels 5 ist in einer Schwenkachse A gelagert. Am Fußende des Schenkels 5 ist eine Federvorrichtung 9 angeordnet, die mit dem Rahmen R verbunden ist und eine Druckfeder 91 besitzt. Die Druckfeder 91 ist in Schließlage gespannt und drückt den Schenkel 5 über die Schwenkachse A und den Schenkel 51 an die Verschlußklappe 1. Durch die Verschlüsse 6 wird jedoch die Verschlußklappe 1 am Rahmen R gehalten.

Der Schenkel 5 ist in einer Führungseinrichtung 8 gelagert. Die Führungseinrichtung 8 ist vorteilhafterweise eine Hülse 81. Die Bohrung der Hülse 8 hat verschlußklappenseitig den Durchmesser entsprechend dem Schenkel 5 und am anderen Ende einen größeren Durchmesser als den des Schenkels 5. Der Übergang zwischen den beiden Bohrungen erfordert eine Führung für den Schenkel 5. Eine solche Führung wird erreicht in dem der Innendurchmesser der Hülse 81 beispielsweise konisch verjüngt wird. Die Verjüngung könnte aber auch kreisbogenförmig erfolgen. In Schließlage hat der Schenkelabschnitt mit verkleinertem Durchmesser vom Schenkel 5 keinen Eingriff mit der Hülse 81. Es existiert ein Bewegungsfreiraum (Spiel) 7 zwischen Hülse 81 und Schenkel 5.

Die Verschlußklappe 1 ist in eine Öffnungslage OL führbar, indem die lasttragenden Verschlüsse 6 geöffnet werden, d. h. der Spannarm 61 des Verschlusses muß vom Rahmen R abgehoben werden (vergleiche Figur 4). Mit dem Entriegeln aller Verschlüsse 6 kann die bisher gemäß Figur 5 gespannte Druckfeder 91 entspannen. Die entspannende Druckfeder 91 schiebt gemäß **Figur 5a** den rahmenseitigen Schenkel 5 auf Anschlag 52 an die Hülse 81, wobei die Verschlußklappe 1 aus ihrer ursprünglichen Ebene (Schließlage SL) in eine andere Ebene (Öffnungslage OL) gehoben wird. Durch diesen Hub der Verschlußklappe 1 werden die Langlöcher 3 der Verschlußklappe 1 aus dem Eingriff der Stehbolzen 2 entfernt. Die Verschlußklappe 1 ist in der Öffnungslage, wie Figur 5a zeigt, um die Schwenkachse A (Pfeil) schwenkbar.

Das Gelenk 4 ist somit ein höhenverstellbares Gelenk. Dieses Gelenk 4 wird vorteilhafterweise als Dreh-Hub-Scharnier ausgeführt. Es ermöglicht sowohl eine Hubbewegung des Scharniers, als auch eine Drehbewegung der Schenkel des Scharniers.

### Bezugszeichenliste

Es bezeichnen:
- 1: Verschlussklappe
- 2: Formverbindungselement / Stehbolzen
- 2': Stehbolzen
- 3: Langlöcher
- 4: Gelenk
- 5: Rahmenseitiger Schenkel von 4
- 51: Schenkel
- 52: Anschlag
- 6: Verschluss
- 61: Spannarm
- 7: Bewegungsfreiraum (Spiel)
- 8: Führungseinrichtung
- 81: Führungshülse
- 9: Federvorrichtung
- 91: Druckfeder

- α: Kippwinkel von 1
- A: Schwenkachse von 1
- D: Dichtung
- E: Gefährdeter Bereich von S1
- F: Sichtfenster
- G: Griffelement
- K: Kippachse von 1
- M: Kraftübertragungsmittel
- M1: Anschlusspunkt für Landewerk
- M2: Anschlusspunkt für Landewerk
- OL: Öffnungslage von 1
- R: Rahmen
- RS: Rumpfsektion
- S1: Schalensegment
- S2: Schalensegment
- SL: Schließlage von 1
- T: Nahtbereich zwischen S1, S2
- W: Auslenkung
- Y1: Spalt

## Patentansprüche

1. Hubschrauber-Schalensegment (S1), mit einem Ausschnitt, einem an dem Ausschnitt angeordneten Rahmen (R) und einer den Ausschnitt verschließenden Verschlussklappe (1), die mittels eines Gelenks (4) um eine Schwenkachse (A) schwenkbar am Rahmen (R) angeordnet ist und die bei einer Schließlage (SL) der Verschlussklappe (1) am Umfang des Ausschnitts am Rahmen (R) anliegt und die mittels an der Verschlussklappe (1) angeordneter Verschlüsse (6) am Umfang des Ausschnitts verriegelbar ist,
wobei
im Bereich einer Kante der Verschlussklappe (1) eine Kippachse (K) angeordnet ist, welche senkrecht zur Ebene der Verschlussklappe (1) verläuft, und um welche die Verschlussklappe (1) in der Schließlage (SL) bei einer Verformung des Schalensegmentes (S1) um einen Kippwinkel (α) kippbar ist, so dass die Verformung zwischen dem Schalensegment (S1) und der Verschlussklappe (1) ausgeglichen werden kann.

2. Hubschrauber-Schalensegment (S1) nach Anspruch 1,
**dadurch gekennzeichnet, dass**
die Kippachse (K) im Bereich der gelenkseitigen (4) Kante der Verstellklappe (1) angeordnet ist.

3. Hubschrauber-Schalensegment (S1) nach Anspruch 1,
**dadurch gekennzeichnet, dass**
die Verschlussklappe (1) in der Schließlage (SL) über miteinander in Eingriff stehende Kraftübertragungsmittel (M; 2, 3), die an einem Randbereich der Verschlussklappe (1) und des Ausschnitts vorgesehen sind, mit dem Schalensegment (S1) verbindbar ist,
wobei die Kraftübertragungsmittel (M; 2, 3) in einer Richtung (X-Richtung) aus Quer- und Schubkräften resultierende Lasten zwischen der Verschlussklappe (1) und dem Hubschrauber-Schalensegment (S1) übertragen und in einer zweiten Richtung (Y-Richtung) erst ab einem bestimmten Verformungsniveau des Hubschrauber-Schalensegments (S1) aus Quer- und Schubkräften resultierende Lasten zwischen der Verschlussklappe (1) und dem Hubschrauber-Schalensegment (S1) übertragen.

4. Hubschrauber-Schalensegment (S1) nach Anspruch 1,
**dadurch gekennzeichnet, dass**
als Kraftübertragungsmittel Formverbindungselemente (2) angeordnet sind, die sich in der Schließlage (SL) der Verschlussklappe (1) in Eingriff mit Langlöchem (3) befinden.

5. Hubschrauber-Schalensegment (S1) nach Anspruch 4,
**dadurch gekennzeichnet, dass**
die Formverbindungselemente Stehbolzen (2) sind und die Langlöcher (3) an einem Randbereich der Verschlussklappe (1) vorgesehen sind, oder umgekehrt, und die Langlöcher (3) in der Schließlage (SL) der Verschlussklappe (1) in Eingriff mit den Stehbolzen (2) stehen, wobei die Stehbolzen (2) in einer Richtung (X-Richtung) quer zur Längserstreckung der Langlöcher (3) kraftübertragend in den Langlöchem (3) anliegen, und jeweils in Richtung (Y-Richtung) der Längserstreckung eines Langlochs (3) ein Spalt (Y1) zwischen einem Stehbolzen (2) und einem Ende des Langlochs (3) besteht, so dass das Langloch (3) bei einem Kippen der Verschlussklappe (1) eine zwangsweise Bewegungsrichtung (Y-Richtung) des Stehbolzens (2) in dem Langloch (3) definiert und der Stehbolzen (2) ab einem bestimmten Verformungsniveau des Hubschrauber-Schalensegments (S1) zur Übertragung von Lasten in Richtung (Y-Richtung) der Längserstreckung eines Langlochs (3) in Anschlag mit dem Ende des Langlochs (3) bringbar ist.

6. Hubschrauber-Schalensegment (S1) nach Anspruch 4 oder 5,
**dadurch gekennzeichnet, dass**
die Langlöcher (3) mit ihrer größten Weite in Längsrichtung (Y-Richtung) des Hubschrauber-Schalensegments (S1) angeordnet sind.

7. Hubschrauber-Schalensegment (S1) nach Anspruch 1,
**dadurch gekennzeichnet, dass**
die Verschlussklappe (1) ausgehend von einer die Schließlage (SL) definierenden ersten Ebene (SL), in der die Kraftübertragungsmittel (M; 2, 3) miteinander in Eingriff stehen, in Richtung der Kippachse (K) zu einer eine Öffnungslage (OL) definierenden zweiten Ebene, in der die Kraftübertragungsmittel (M; 2, 3) außer Eingriff stehen, anhebbar ist.

8. Hubschrauber-Schalensegment (S1) nach Anspruch 1,
**dadurch gekennzeichnet, dass**
das Gelenk (4) mit einer Kante der Verschlussklappe (1) und dem Rahmen (R) verbunden und zwischen der Schließlage (SL) und der Öffnungslage (OL) in Richtung der Kippachse (K) höhenverstellbar ist.

9. Hubschrauber-Schalensegment (S1) nach Anspruch 8,
**dadurch gekennzeichnet, dass**
das höhenverstellbare Gelenk (4) als ein Schub-Dreh-Scharnier ausgebildet ist, welches sowohl die Schwenkachse (A) als auch die Kippachse (K) aufweist.

10. Hubschrauber-Schalensegment (S1) nach Anspruch 8 oder 9,
**dadurch gekennzeichnet, dass**
das höhenverstellbare Gelenk (4) ein Hubmittel (91) besitzt, mit dem die Verschlussklappe (1) von der Schließlage (SL) in die Öffnungslage (OL) anhebbar ist.

11. Hubschrauber-Schalensegment (S1) nach Anspruch 9 oder 10,
**dadurch gekennzeichnet, dass**
der Schub-Dreh-Scharnier (4) einen rahmenseitigen, verschiebbaren und verdrehbaren Gelenkschenkel (5) und eine rahmenseitig angeordnete Führungseinrichtung (8) für den Gelenkschenkel (5) aufweist, die in der öffnungslage (OL) der Verschlussklappe (1) in Eingriff mit dem Gelenkschenkel (5) steht und den Gelenkschenkel (5) führt, und die in der Schließlage (SL) der Verschlussklappe (1) außer Eingriff mit dem Gelenkschenkel (5) steht.

12. Hubschrauber-Schalensegment (S1) nach Anspruch 11,
**dadurch gekennzeichnet, dass**
die Führungseinrichtung (8) durch eine Hülse (81) gebildet ist.

13. Hubschrauber-Schalensegment (S1) nach Anspruch 12,
**dadurch gekennzeichnet, dass**
der Innendurchmesser der Hülse (81) verjüngt ist.

14. Hubschrauber-Schalensegment (S1) nach Anspruch 13,
**dadurch gekennzeichnet, dass**
der Innendurchmesser der Hülse (81) konisch verjüngt ist.

15. Hubschrauber-Schalensegment (S1) nach einem der Ansprüche 11 bis 14,
**dadurch gekennzeichnet, dass**
und der Gelenkschenkel (5) einen Abschnitt mit einem großen und einem kleinen Durchmesser aufweist, von denen der Abschnitt mit dem kleinen Durchmesser in der Schließlage (SL) der Verschlussklappe (1) einen Bewegungsfreiraum (7) zwischen der Hülse (81) und dem Gelenkschenkel (5) bildet und von denen der Abschnitt mit dem großen Durchmesser in der Öffnungslage (OL) der Verschlussklappe (1) von der Hülse geführt ist.

## Claims

1. Helicopter shell segment (S1) with a cut-out, a frame (R) arranged at the cut-out and a closing cap (1) which closes the cut-out and is arranged on the frame (R) swivellable by means of a hinge (4) about a swivel axis (A) and which, when the closing cap (1) is in a closed position (SL), lies against the frame (R) at the periphery of the cut-out and can be locked on the periphery of the cut-out by means of closures (6) arranged on the closing cap (1),
wherein
in the area of an edge of the closing cap (1) is arranged a tilt axis (K) which runs perpendicular to the plane of the closing cap (1) and about which, on deformation of the shell segment (S1), the closing cap (1) can be tilted about a tilt angle (α) into the closed position (SL) so that the deformation between the shell segment (S1) and the closing cap (1) can be compensated.

2. Helicopter shell segment (S1) according to claim 1, **characterized in that**
the tilt axis (K) is arranged in the area of the hinge-side (4) edge of the closing cap (1).

3. Helicopter shell segment (S1) according to claim 1, **characterised in that** the closing cap (1) in the closed position (SL) can be connected to the shell segment (S1) via mutually engaged force transfer means (M; 2, 3) which are provided on an edge area of the closing cap (1) and the cut-out,
wherein the force transfer means (M; 2, 3) transfer in one direction (X direction) the loads resulting from transverse and shear forces between the closing cap (1) and the helicopter shell segment (S1), and transfer in a second direction (Y direction) the loads resulting from transverse and shear forces between the closing cap (1) and the helicopter shell segment (S1) only beyond a specific deformation level of the helicopter shell segment (S1).

4. Helicopter shell segment (S1) according to claim 1, **characterised in that**
as a force transfer means, form connection elements (2) are arranged which in the closed position (SL) of the closing cap (1) engage in slots (3).

5. Helicopter shell segment (S1) according to claim 4, **characterised in that**
the form connection elements are stud bolts (2) and the slots (3) are provided on an edge area of the closing cap (1) or vice versa, and the slots (3) in the closed position (SL) of the closing cap (1) are in engagement with the stud bolts (2), the stud bolts (2) lying force-transferring in the slots (3) in one direction (X direction) transverse to the longitudinal extension of the slots (3), and in the direction (Y direction) of longitudinal extension of a slot (3) in each case there is a gap (Y1) between a stud bolt (2) and an end of the slot (3) so that the slot (3), on tilting of the closing cap (1), defines a forced movement direction (Y direction) of the stud bolt (2) in the slot (3), and beyond a specific deformation level of the helicopter shell segment (S1), for the transfer of loads in the direction (Y direction) of longitudinal extension of a slot (3), the stud bolt (2) can be brought into contact with the end of the slot (3).

6. Helicopter shell segment (S1) according to claim 4 or 5,
**characterised in that**
the slots (3) are arranged with their greatest width in the longitudinal direction (Y direction) of the helicopter shell segment (S1).

7. Helicopter shell segment (S1) according to claim 1, **characterised in that**
the closing cap (1), starting from a first plane (SL) defining the closed position (SL) in which the force transfer means (M; 2, 3) are in mutual engagement, can be raised in the direction of the tilt axis (K) to a second plane defining an open position (OL) in which the force transfer means (M; 2, 3) are out of engagement.

8. Helicopter shell segment (S1) according to claim 1, **characterised in that**
the hinge (4) is connected to one edge of the closing cap (1) and the frame (R) and can be adjusted in height between the closed position (SL) and the open position (OL) in the direction of the tilt axis (K).

9. Helicopter shell segment (S1) according to claim 8, **characterised in that**
the height-adjustable hinge (4) is formed as a slide-twist hinge which comprises both the swivel axis (A) and the tilt axis (K).

10. Helicopter shell segment (S1) according to claim 8 or 9,
**characterised in that**
the height-adjustable hinge (4) has a lifting means (91) with which the closing cap (1) can be lifted from the closed position (SL) to the open position (OL).

11. Helicopter shell segment (S1) according to claim 9 or 10,
**characterised in that**
the slide-twist hinge (4) has a slidable and twistable hinge leg (5) on the frame side and a guide device (8) arranged on the frame side for the hinge leg (5), which device in the open position (OL) of the closing cap (1) is in engagement with the hinge leg (5) and guides the hinge leg (5), and in the closed position (SL) of the closing cap (1) is out of engagement with the hinge leg (5).

12. Helicopter shell segment (S1) according to claim 11,
**characterised in that**
the guide device (8) is formed by a sleeve (81).

13. Helicopter shell segment (S1) according to claim 12,
**characterised in that**
the internal diameter of the sleeve (81) is tapered.

14. Helicopter shell segment (S1) according to claim 13,
**characterised in that**
the internal diameter of the sleeve (81) is tapered conically.

15. Helicopter shell segment (S1) according to any of claims 11 to 14,
**characterised in that**
the hinge leg (5) has a section with a large and a small diameter, of which the section with the small diameter in the closed position (SL) of the closing cap (1) forms a movement clearance (7) between the sleeve (81) and the hinge leg (5) and of which the section with the large diameter is guided by the sleeve in the open position (OL) of the closing cap (1).

## Revendications

1. Segment de coque (S1) pour hélicoptère, comprenant une découpe, un cadre (R) disposé sur la découpe et un volet de fermeture (1) fermant la découpe qui est disposé pivotable contre le cadre (R) au moyen d'une articulation (4) autour d'un axe de pivotement (A) et repose contre le cadre en position de fermeture (SL) du volet de fermeture (1) sur la circonférence de la découpe et est verrouillable contre la circonférence de la découpe au moyen de dispositifs de verrouillage (6) disposés sur le volet de fermeture (1),
**caractérisé en ce que**
au niveau d'une arête du volet de fermeture (1) est disposé un axe de basculement (K) qui s'étend perpendiculaire au plan du volet de fermeture (1) et autour duquel le volet de fermeture (1) est basculable selon un angle de basculement (α) dans la position de fermeture (SL) lors d'une déformation du segment de coque (S1) de manière à compenser la déformation entre le segment de coque (S1) et le volet de fermeture (1).

2. Segment de coque (S1) pour hélicoptère en cuivre selon la revendication 1,
**caractérisé en ce que**
l'axe de basculement (K) est disposé au niveau de l'arête du côté de l'articulation (4) du volet de fermeture (1).

3. Segment de coque (S1) pour hélicoptère selon la revendication 1.
**caractérisé en ce que**
le volet de fermeture (1) est reliable, dans la position de fermeture (SL), au segment de coque (S1) par des moyens de transmission (M ; 2, 3) engrenés ensemble qui sont prévus sur une région de bord du volet de fermeture (1) et de la découpe, dans lequel les moyens de transmission (M ; 2, 3) transmettent dans une direction (direction X) des charges résultant des forces transversales et des efforts de cisaillement entre le volet de fermeture (1) et le segment de coque (S1) pour hélicoptère, et transmettent dans une deuxième direction (direction Y) uniquement à partir d'un niveau de déformation défini du segment de coque (S1) pour hélicoptère des charges résultant des forces transversales et des efforts de cisaillement entre le volet de fermeture (1) et le segment de coque (S1) pour hélicoptère.

4. Segment de coque (S1) pour hélicoptère selon la revendication 1,
**caractérisé en ce que**
des éléments de liaison moulés (2) sont disposés comme moyens de transmission qui se trouvent engrenés avec les trous oblongs (3) dans la position de fermeture (SL) du volet de fermeture (1).

5. Segment de coque (S1) pour hélicoptère selon la revendication 4,
**caractérisé en ce que**
les éléments de liaison moulés (2) sont des vis sans tête (2) et les trous oblongs (3) sont prévus dans une région du bord du volet de fermeture (1), ou inversement, et les trous oblongs (3) s'engrènent avec les vis sans tête (2) dans la position de fermeture (SL) du volet de fermeture (1), les vis sans tête (2) reposant en transmission de force dans les trous oblongs (3) dans une direction (direction X) transversale à l'étendue longitudinale des trous oblongs (3), et comprennent respectivement un écartement (Y1) entre une vis sans tête (2) et une extrémité du trou oblong (3) dans la direction (direction Y) de l'étendue longitudinale d'un trou oblong (3) de telle sorte que le trou oblong (3) définit une direction contrainte de mouvement (direction Y) de la vis sans tête (2) dans le trou oblong (3) lors du basculement du volet de fermeture (1) et que la vis sans tête (2) peut être amenée en butée contre l'extrémité d'un trou oblong (3) à partir d'un niveau de déformation défini du segment de coque (51) pour hélicoptère pour transmettre des charges dans la direction (direction Y) de l'étendue longitudinale du trou oblong (3).

6. Segment de coque (S1) pour hélicoptère selon la revendication 4 ou 5.
**caractérisé en ce que**
les trous oblongs (3) sont disposés avec leurs largeurs les plus grandes dans la direction longitudinale (direction Y) du segment de coque (S1) pour hélicoptère.

7. Segment de coque (S1) pour hélicoptère selon la revendication 1,
**caractérisé en ce que**
le volet de fermeture (1) est rclevable à partir d'un premier plan (SL) définissant la position de fermeture (SL), dans lequel les moyens de transmission (M ; 2, 3) sont engrenés ensemble, dans la direction de l'axe de basculement (K) vers un deuxième plan définissant une position d'ouverture (OL), dans lequel les moyens de transmission (M ; 2, 3) ne sont plus engrenés.

8. Segment de coque (S1) pour hélicoptère selon la revendication 1,
**caractérisé en ce que**
l'articulation (4) est reliée à une arête du volet de fermeture (1) et au cadre (R) et est largement réglable entre la position de fermeture (SL) et la position d'ouverture (OL) dans la direction de l'axe de basculement (K).

9. Segment de coque (S1) pour hélicoptère selon la revendication 8.
**caractérisé en ce que**
l'articulation à grand réglage est configurée comme une charnière de levage et de rotation qui présente aussi bien l'axe de pivotement (A) que l'axe de basculement (K).

10. Segment de coque (S1) pour hélicoptère selon la revendication 8 ou 9,
**caractérisé en ce que**
l'articulation à grand réglage (4) comprend un moyen de levage (91) avec lequel le volet de fermeture (1) est relevable de sa position de fermeture (SL) vers sa position d'ouverture (OL).

11. Segment de coque (SI) pour hélicoptère selon la revendication 9 ou 10,
**caractérisé en ce que**
la charnière de levage et de rotation (4) présente un bras d'articulation (5) rotatif et mobile du côté du cadre et un dispositif de guidage (8) disposé du côté du cadre pour le bras d'articulation (5) qui s'engrène avec le bras d'articulation (5) dans la position d'ouverture (OL) du volet de fermeture (1) et dirige le bras d'articulation (5) et qui n'est plus engrené avec le bras d'articulation (5) dons la position de fermeture (SL) du volet de fermeture (1).

12. Segment de coque (S1) pour hélicoptère selon la revendication 11.
**caractérisé en ce que**
le dispositif de guidage (8) est formé par un manchon (81).

13. Segment de coque (S1) pour hélicoptère selon la revendication 12,
**caractérisé en ce que**
le diamètre intérieur du manchon (81) est rétréci.

14. Segment de coque (S1) pour hélicoptère selon la revendication 13,
**caractérisé en ce que**
le diamètre intérieur du manchon (81) est rétréci en forme de cône.

15. Segment de coque (S1) pour hélicoptère selon l'une des revendications 11 à 14,
**caractérisé en ce que**
le bras d'articulation (5) présente une portion avec un grand diamètre et un petit diamètre, par lesquels la portion avec le petit diamètre forme un espace libre de mouvement (7) entre le manchon (81) et le bras d'articulation (5) dans la position de fermeture (SL) du volet de fermeture (1) et par lesquels la portion avec le grand diamètre est dirigée par le manchon dans la position d'ouverture (OL) du volet de fermeture (1).
